Europäisches Patentamt

European Patent Office

Office européen des brevets

(19)

(11) Veröffentlichungsnummer : **0 477 398 B1**

# (12) EUROPÄISCHE PATENTSCHRIFT

(45) Veröffentlichungstag der Patentschrift :
14.12.94 Patentblatt 94/50

(51) Int. Cl.$^5$ : **G05B 19/41**

(21) Anmeldenummer : **90118385.5**

(22) Anmeldetag : **25.09.90**

(54) **Verfahren für die Bearbeitung von Werkstücken mit numerisch gesteuerten Maschinen.**

(43) Veröffentlichungstag der Anmeldung :
01.04.92 Patentblatt 92/14

(45) Bekanntmachung des Hinweises auf die
Patenterteilung :
14.12.94 Patentblatt 94/50

(84) Benannte Vertragsstaaten :
**CH DE ES FR GB IT LI**

(56) Entgegenhaltungen :
EP-A- 0 145 967
EP-A- 0 175 792
US-A- 3 629 558
US-A- 4 162 527

(56) Entgegenhaltungen :
**PROCEEDINGS OF IEEE INTERNATIONAL
CONFERENCE ON ROBOTICS AND AUTOMA-
TION, Band1, 10. April 1986, San Francisco,
California, USA; Seiten 156-165: U.A.SUNGUR-
TEKIN et al.: "Graphical simulation & automatic verification of NC machining programs"**

(73) Patentinhaber : **Dr. Johannes Heidenhain
GmbH
Postfach 12 60
D-83292 Traunreut (DE)**

(72) Erfinder : **Körner, Klaus-Dieter, Dipl.-Phys.
Königsbergerstrasse 16
D-8220 Traunstein (DE)**
Erfinder : **Vollmayr, Norbert, Dipl.-Ing.
Kreisstrasse 10
D-8221 Traunwalchen (DE)**

EP 0 477 398 B1

## Beschreibung

Die Erfindung betrifft ein Verfahren für die Bearbeitung von Werkstücken gemäß dem Oberbegriff des Anspruchs 1.

Derartige Verfahren sind aus zahlreichen Druckschriften bekannt. Beispielsweise ist aus der DE-36 08 438-A1, die der korrespondierenden US-4 868 761-A entspricht, ein sehr anspruchsvolles Verfahren bekannt, bei dem mittels computerunterstütztem Design (CAD) und computerunterstützter Herstellung (CAM) die Berechnung von freien gekrümmten Flächen für die Herstellung mittels numerisch gesteuerter Maschinen möglich sein soll.

Bei diesem Verfahren soll allerdings ausdrücklich die Funktion, eine Gestalt zu definieren, vollständig getrennt sein von der Funktion, den geometrischen Ort eines Werkzeugs zu bestimmen. Letzteres ist die Aufgabe einer numerischen Steuerung.

Diese vollständige Trennung ist aus dem Inhalt dieser Druckschrift und aus dem Wissen von Fachleuten verständlich, denn mit der Berechnung von mathematisch nur äußerst schwer bestimmbaren freien Flächen ist eine NC-Steuerung in der Praxis überfordert.

Der Erfindung liegt die Aufgabe zugrunde, ein Verfahren anzugeben, nach dem die Bearbeitung von mathematisch definierbaren Körpern auf einfache Weise möglich ist.

Diese Aufgabe wird durch ein Verfahren mit den Merkmalen des Anspruches 1 gelöst.

Die Vorteile der Erfindung liegen darin, daß das allgemeine Problem der Herstellung beliebiger Körper auf die Gruppe von Körpern reduziert wird, die durch Grundkörper (sogenannte Primitive) konstruiert werden können, so daß die erforderlichen Fräserbahnen mit den Möglichkeiten einer NC-Steuerung berechnet und die Werkstücke auf NC-gesteuerten Maschinen hergestellt werden können.

Die Erfindung wird nachstehend mit Hilfe der Zeichnungen anhand von Beispielen erläutert.

Es zeigt:

Figur 1       eine numerisch gesteuerte Fräsmaschine;
Figur 2A      einen Halter, der in
Figur 2B      in seine Grundkörper zerlegt dargestellt ist;
Figur 3A      eine 2d-Kontur und
Figur 3B      ein daraus erzeugtes 3d-Objekt,
Figur 3C      eine korrigierte 2d-Kontur und
Figur 3D      ein daraus erzeugtes korrigiertes 3d-Objekt;
Figur 4A      die Vereinigung zweier Grundkörper,
Figur 4B      die Differenz zweier Grundkörper und
Figur 4C      den Durchschnitt zweier Grundkörper;
Figur 5       ein Frästeil in Draufsicht;
Figur 6A      eine Fräserbahn-Kontur,
Figur 6B      einen vergrößerten Abschnitt der Fräserbahn-Kontur und
Figur 7       ein Blockdiagramm.

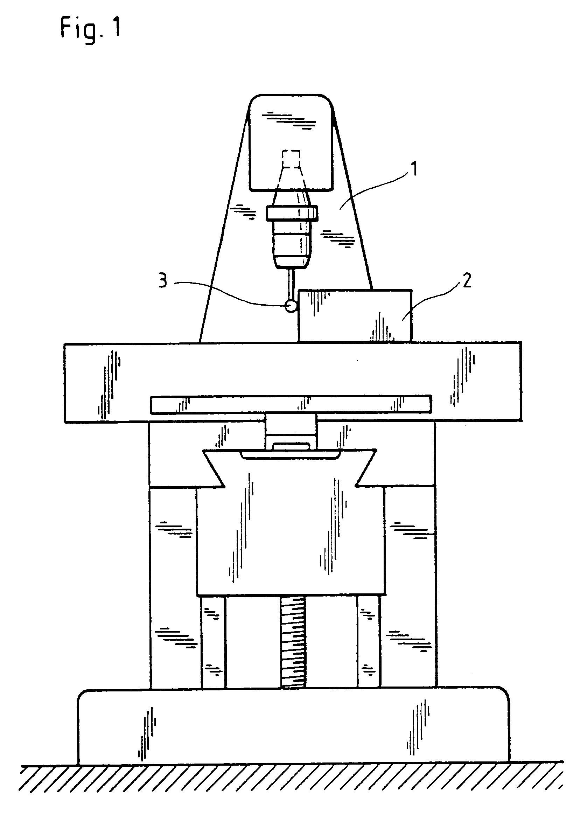

Eine in Figur 1 gezeigte numerisch gesteuerte Fräsmaschine 1 dient zur Durchführung des Verfahrens gemäß der Erfindung.

Ein zu bearbeitendes Werkstück wird durch einen Werkstück-Rohling 2 dargestellt und ein zur Bearbeitung des Werkstück-Rohlinges 2 dienendes Werkzeug wird durch einen Kugelfräser 3 realisiert.

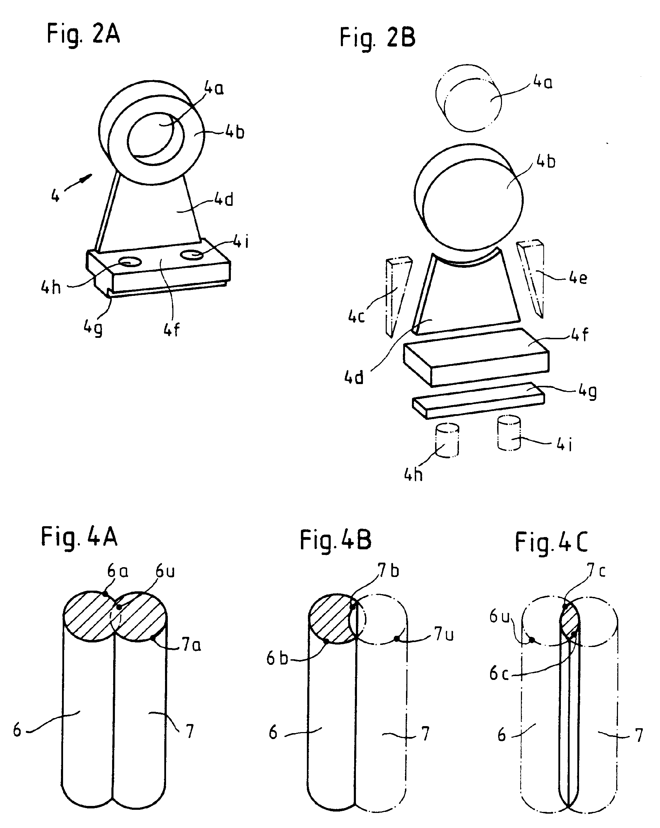

Ein in Figur 2A dargestellter Lagerbock 4 zeigt gemäß Figur 2B, daß derartige Körper aus einfachen Grundkörpern 4a bis 4i zusammen gesetzt werden können, und zwar durch Mengenoperationen (sogenannte Bool'sche Operationen). Dies ist auch in der eingangs erwähnten DE-36 08 438-A1 zum Stand der Technik bei CAD-Systemen erläutert.

Bezogen auf den Lagerbock 4 bedeutet dies, daß die Bohrung 4a (eine Rundsäule) von der Nabe 4b (auch eine Rundsäule) subtrahiert wird. Die Nabe 4b wird ihrerseits vom Steg 4d (eine Trapezsäule) abgezogen. Eine Trapezsäule 4d entsteht wiederum durch Subtraktion von zwei Dreiecksäulen 4c, 4e von dem ursprünglich eine Rechtecksäule darstellenden Steg 4d. Zu den vorgenannten einfachen Grundkörpern (auch Primitive genannt) wird eine Grundplatte 4f (eine Rechtecksäule) addiert. Eine weitere Rechtecksäule (Leiste 4g) wird ebenfalls addiert. Zwei von Rundsäulen gebildete Schraubenlöcher 4h und 4i werden subtrahiert. Aus diesem Beispiel wird ersichtlich, daß auch verhältnismäßig kompliziert erscheinende Körper wie der Lagerbock 4 aus einfachen, mathematisch bestimmbaren Grundkörpern 4a bis 4i zusammengesetzt werden kann.

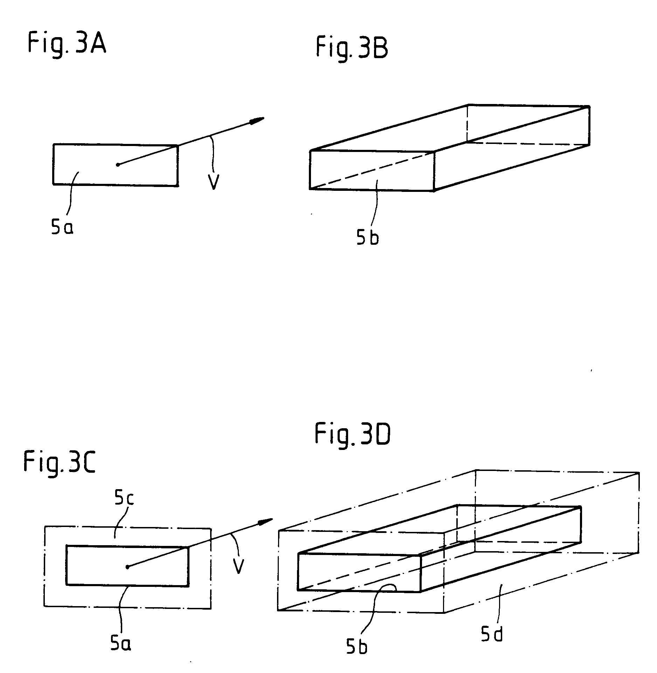

Die Erzeugung von Grundkörpern ist durch die Figuren 3A bis 3D dargestellt.

In Figur 3A ist eine 2d-Kontur in Form eines Rechteckes 5a gezeigt. Dieses Rechteck 5a wird in Richtung eines Vektors V um einen bestimmten Betrag verschoben. Dadurch entsteht ein Translationskörper, der gemäß Figur 3B eine Rechtecksäule mit der Bezeichnung 5b darstellt. Auf diese Weise entstehen die Grundkörper,

2

die bereits in der Figur 2B näher erläutert wurden.

Rotationskörper lassen sich auf die gleiche Weise erzeugen, indem eine zweidimensionale Kontur um eine Achse rotiert. Auf eine zeichnerische Darstellung wurde verzichtet, da leicht vorstellbar ist, daß ein Kreisring mit rechteckigem Querschnitt entsteht, wenn das Rechteck 5a um eine Achse außerhalb seiner Kontur rotiert. Unter Bezug auf Figur 2A ließe sich auf diese Weise durch einen Rotationskörper, der durch ein rotierendes Rechteck erzeugt wird, die Nabe 4b definieren. Dann entfiele die Differenzmengenbildung der Rundsäulen 4b ( \ ) 4a gemäß Figur 2B und zugehöriger Beschreibung.

Um einen Körper (Rechtecksäule 5b oder beliebige andere Grundkörper bzw. deren Kombinationen) aus einem Werkstück-Rohling 2 herzustellen, muß ein Werkzeug (Kugelfräser 3) auf einer äquidistanten Bahn zu der gewünschten Kontur bewegt werden.

Maßgeblich für die Steuerung des Werkzeuges sind also nicht direkt die gewünschten Abmessungen des Werkstückes, sondern die um den Radius des Kugelfräsers 3 korrigierten Werkzeug-Bewegungsbahn-Daten.

Wenn beliebige Körper, wie gemäß Figur 2A gezeigt, aus einfachen Grundkörpern zusammengesetzt werden, wie in Figur 2B gezeigt, so werden die Korrekturberechnungen verhältnismäßig kompliziert, da sich die durch die korrigierten Bahndaten bestimmten Werkzeugbahn-Konturen zwangsläufig nicht mit den Schnittlinien der zusammengesetzten Grundkörper decken.

Um die Ermittlung der Werkzeugbahn-Konturen bzw. deren Bahndaten zu vereinfachen, wird gemäß Figur 3C bereits an der einfachen 2d-Kontur 5a eine Fräserbahnkorrektur vorgenommen. Diese Werkzeugbahn-Kontur ist strichpunktiert dargestellt und bildet eine korrigierte 2d-Kontur mit der Bezeichnung 5c. Analog zur Erzeugung eines 3d-Objektes nach Figur 3A/3B wird die korrigierte 2d-Kontur entlang eines Vektors V translatorisch verschoben und auf diese Weise das korrigierte 3d-Objekt 5d (Figur 3D) gebildet. Wie die Zeichnung 3D erkennen läßt, beschreiben die Oberflächen des korrigierten Körpers 5d äquidistante Flächen zu den Oberflächen des Grundkörpers 5b.

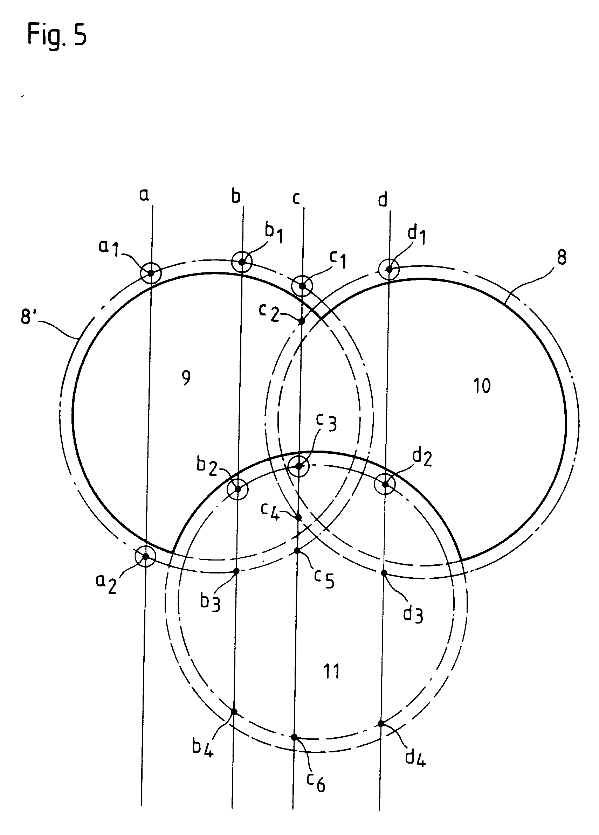

Die Zusammensetzung der gewünschten Körper zum herzustellenden Werkstück erfolgt nun anhand der bereits korrigierten Körper, so daß die Werkzeugbahn-Konturen sich mit den Schnittlinien eines zusammengesetzten - bereits korrigierten - Gesamtkörpers 8 decken, auf den später anhand von Figur 5 noch eingegangen wird.

Nun werden die Schnittlinien zwischen den korrigierten Oberflächen und der jeweiligen Bearbeitungsebene berechnet. Dies sind bei Translationskörpern Geradenabschnitte und bei Rotationskörpern die Kurven von allgemeinen Kegel- bzw. Zylinderschnitten.

Es ist sinnvoll, die Folge der erzeugten Kurven zu linearisieren und zwar unter Berücksichtigung der durch die Maschine vorgegebenen Auflösung.

Dazu ist ein Verfahren geeignet, mit dem in Abhängigkeit von der tatsächlichen Krümmung der Kurve eine Interpolation mit 3d-Geradenabschnitten erzeugt wird. Dadurch ist gewährleistet, daß immer nur soviele Geradenabschnitte erzeugt werden, wie zur Einhaltung des maximalen Fehlers notwendig sind, was zu einer starken Reduktion der Datenmengen und somit zur Einsparung von Speicherplatz führt.

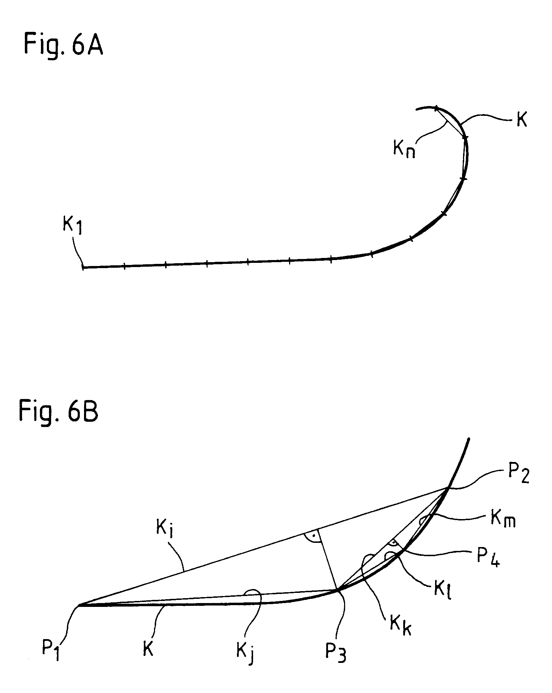

Die Folge der auf diese Art und Weise berechneten Geradenabschnitte ergibt die korrigierte Schnittkontur. Dieses Verfahren wird später noch anhand der Figuren 6A und 6B beschrieben.

In den Figuren 4A bis 4C werden drei Bool'sche Grundoperationen anhand zweier ineinander verschachtelter Zylinder 6 und 7 erläutert. Für die Herstellung solcher resultierender Körper ist es wichtig, ob ein beliebiger Punkt auf der Umrandung zulässig ist, oder ob er unzulässig ist. Diese Überprüfung wird später an komplizierten resultierenden Körpern näher erläutert, hier nur die Grundbedingungen:

a. Figur 4A zeigt die Vereinigung der Zylinder 6 und 7, also die Summe ($\cup$).

Wenn die Vereinigungsmenge von den zwei Teilkörpern 6 und 7 gebildet werden soll, ergibt sich ein gültiger Randpunkt 6a dann, wenn der Punkt 6a Randpunkt von Zylinder 6 ist und außerhalb von Zylinder 7 liegt, oder ein Punkt 7a ist Randpunkt von Zylinder 7 und liegt außerhalb von Zylinder 6. Ungültig ist hingegen der Punkt 6u, denn er liegt zwar auf dem Rand von Zylinder 6 (ist also Randpunkt von 6), aber er liegt innerhalb von Zylinder 7, was nach den vorstehenden Regeln unzulässig ist.

b. Figur 4B zeigt die Differenz der Zylinder 6 und 7, also die Operation ( \ ).

Wenn die Differenzmenge von den zwei Teilkörpern 6 und 7 gebildet werden soll, ergibt sich ein gültiger Randpunkt 6b dann, wenn der Punkt 6b Randpunkt von Zylinder 6 ist und außerhalb von Zylinder 7 liegt, oder ein Punkt 7b ist Randpunkt von Zylinder 7 und liegt innerhalb von Zylinder 6. Ungültig ist hingegen der Punkt 7u, denn er liegt zwar auf dem Rand von Zylinder 7, aber außerhalb von Zylinder 6, was unzulässig ist.

Wenn statt der Differenz 6 ( \ ) 7 die Differenz 7 ( \ ) 6 gebildet werden soll, gilt in entsprechender Abwandlung das gleiche.

c. Figur 4C zeigt den Durchschnitt der Zylinder 6 und 7, also die Operation ($\cap$).

Wenn die Schnittmenge von den zwei Teilkörpern 6 und 7 gebildet werden soll, ergibt sich ein gültiger Randpunkt 6c dann, wenn der Punkt 6C Randpunkt von Zylinder 6 ist und innerhalb von Zylinder 7 liegt, oder ein Punkt 7C ist Randpunkt von Zylinder 7 und liegt innerhalb von Zylinder 6. Ein Punkt 6u ist ungültig, obwohl er auf dem Rand von Zylinder 6 liegt, aber er liegt außerhalb von Zylinder 7.

Punkte, die in Schnittpunkten von Umrandungen liegen, sind immer gültige Punkte.

In Fig. 5 ist die Draufsicht auf ein Werkstück 8 und seinen korrigierten Körper 8′ gezeigt, das aus drei Grundkörpern in Form von Zylindern gebildet ist. Die Draufsicht stellt eine Schnittlinie zwischen der Oberfläche des Werkstückes 8 und der jeweiligen Bearbeitungsebene dar. Die Zylinder tragen die Bezeichnungen 9, 10 und 11, wobei 9 und 10 positive Zylinder darstellen und 11 als negativer Zylinder bei der Zusammensetzung des Werkstückes 8 subtrahiert werden muß.

Um ein solches Werkstück 8 herstellen zu können, werden gemäß Vorstehendem zu den Elementar-Zylindern 9, 10 und 11 korrigierte Zylinder erzeugt und mengenalgebraisch verknüpft, um die korrigierten Fräserbahn-Daten zu ermitteln. Bei der Erzeugung der korrigierten Grundkörper wird bereits festgestellt, ob der jeweilige Grundkörper ein Positiv-Körper oder ein Negativ-Körper ist. Mit mengenalgebraischen Operationen werden nachstehend anhand einer Tabelle die gültigen Randpunkte für die Fräserbahn ermittelt.

Um die gültigen Randpunkte zu ermitteln, werden über den dargestellten korrigierten Körper 8′ in einem bestimmten Raster Hilfslinien gelegt. Die Folge der gültigen Randpunkte entspricht der Fräserbahn, die die Kontur des Werkstückes 8 erzeugt.

Zur Verdeutlichung sind lediglich vier Hilfslinien a, b, c, d dargestellt, die aber das Prinzip verständlich machen.

Die Grundbedingung der hier vorliegenden Mengenoperation lautet für die drei Zylinder: 9 und 10 bilden eine Vereinigungsmenge, von der die Menge 11 subtrahiert wird:

$$(9 \cup 10)\backslash 11$$

Die folgenden Randpunktbetrachtungen werden immer an den Konturen der korrigierten Körper 9, 10 und 11 durchgeführt und sind analog zu den Erläuterungen zu den Figuren 4A, 4B und 4C.

Die Hilfslinie a schneidet sich am Punkt a1 mit dem Zylinder 9 (bzw. mit dessen korrigierter Kontur).

a1 ist Randpunkt (R) von Zylinder 9 und liegt außerhalb (A) von Zylinder 10, also ist a1 bei der Vereinigungsmenge $(9 \cup 10)$ ein gültiger Randpunkt. Zur Vereinigungsmenge $(9 \cup 10)$ bildet 11 die Differenzmenge. Dafür gilt: a1 ist Randpunkt (R) von der Vereinigungsmenge $(9 \cup 10)$ und liegt außerhalb (A) von Zylinder 11; a1 ist also auch für die Differenzmenge $(9 \cup 10)\backslash 11$ ein gültiger Randpunkt.

Tabellarisch ausgedrückt:

$$a1 = R_9;\ A_{10} \rightarrow R(9 \cup 10)$$
$$a1 = R_{(9 \cup 10)};\ A_{11} \rightarrow \circledR((9 \cup 10)\backslash 11)$$
$$a2 = R_9;\ A_{10} \rightarrow R(9 \cup 10)$$
$$a2 = R_{(9 \cup 10)};\ A_{11} \rightarrow \circledR((9 \cup 10)\backslash 11)$$

Beide Schnittpunkte a1 und a2 sind demgemäß gültige Randpunkte, die der Fräser anfahren darf. Gültige Randpunkte werden in den Tabellen und in Figur 5 mit einem konzentrischen Kreis um den jeweiligen Punkt kenntlich gemacht, der den Kugelfräser 3 symbolisieren soll.

Für die Hilfslinie b ergibt sich analog:

$$b1 = R_9;\ A_{10} \rightarrow R(9 \cup 10)$$
$$b1 = R_{(9 \cup 10)};\ A_{11} \rightarrow \circledR((9 \cup 10)\backslash 11)$$
$$b2 = I_9;\ I_{10} \rightarrow I(9 \cup 10)$$
$$b2 = R_{11};\ I_{(9 \cup 10)} \rightarrow \circledR(11\backslash(9 \cup 10))$$
$$b3 = R_9;\ A_{10} \rightarrow R(9 \cup 10)$$
$$b3 = R_{(9 \cup 10)};\ I_{11} \rightarrow I(11\backslash(9 \cup 10))$$

Da Punkt b3 nicht für alle Bedingungen gültig ist, stellt er keinen gültigen Randpunkt für die Bearbeitung dar.

$$b4 = A_9;\ A_{10} \rightarrow A(9 \cup 10)$$
$$b4 = R_{11};\ A_{(9 \cup 10)} \rightarrow A((9 \cup 10)\backslash 11)$$

Bei der Hilfslinie b sind also nur die Randpunkte b1 und b2 gültige Fräserbahn-Punkte.

Für die Hilfslinie C gilt:

$$c1 = R_9;\ A_{10} \rightarrow R(9 \cup 10)$$
$$c1 = R_{(9 \cup 10)};\ A_{11} \rightarrow \circledR((9 \cup 10)\backslash 11)$$
$$c2 = R_{10};\ I_9 \rightarrow I(9 \cup 10)$$
$$c2 = I_{(9 \cup 10)};\ A_{11} \rightarrow I((9 \cup 10)\backslash 11)$$
$$c3 = I_9;\ I_{10} \rightarrow I(9 \cup 10)$$
$$c3 = R_{11};\ I_{(9 \cup 10)} \rightarrow \circledR(11\backslash(9 \cup 10))$$
$$c4 = R_{10};\ I_9 \rightarrow I(9 \cup 10)$$
$$c4 = I_{(9 \cup 10)};\ I_{11} \rightarrow I((9 \cup 10)\backslash 11)$$

$$c5 = R_9; A_{10} \rightarrow R(9 \cup 10)$$
$$c5 = R_{(9 \cup 10)}; I_{11} \rightarrow I((9 \cup 10)\backslash 11$$
$$c6 = A_9; A_{10} \rightarrow A(9 \cup 10)$$
$$c6 = R_{11}; A_{(9 \cup 10)} \rightarrow A((9 \cup 10)\backslash 11$$

Bei der Hilfslinie c sind demgemäß die Randpunkte c1 und c3 gültige Fräserbahn-Punkte.

Für die Hilfslinie d gilt die Betrachtung:

$$d1 = R_{10}; A_9 \rightarrow R(10 \cup 9)$$
$$d1 = R_{(10 \cup 9); A11} \rightarrow ®((10 \cup 9)\backslash 11$$
$$d2 = A_9; I_{10} \rightarrow I(9 \cup 10)$$
$$d2 = R_{11}; I_{(10 \cup 9)} \rightarrow ® (11\backslash(9 \cup 10))$$
$$d3 = R_{10}; A_9 \rightarrow R(10 \cup 9)$$
$$d3 = R_{(10 \cup 9)}; I_{11} \rightarrow I(11\backslash(10 \cup 9))$$
$$d4 = A_9; A_{10} \rightarrow A(9 \cup 10)$$
$$d4 = R_{11}; A_{(10 \cup 9)} \rightarrow A((9 \cup 10)\backslash 11)$$

Bei der Betrachtung der stärker ausgezogenen Begrenzungslinie des Werkstückes 8 zeigt sich, daß alle als gültige Punkte erkannten Randpunkte a1, a2; b1, b2; c1, c3; d1, d2 auf der korrigierten Kontur, also auf einer Äquidistanten zur Werkstückkontur liegen, deren Abstand dem Radius r des Kugelfräsers 3 aus Figur 1 entspricht.

Die Lage der hier betrachteten Hilfslinien ist willkürlich. Bei der Realisierung der Erfindung liegen die Hilfslinien so eng beieinander, daß sich beim Fräsen eine kontinuierlich verlaufende Fräserbahn ergibt.

Nunmehr soll die vorerwähnte Linearisierung anhand der Figuren 6A und 6B erläutert werden. In Figur 6A ist ein gekrümmter Verlauf einer Kontur K gezeigt, der gemäß dem Stand der Technik durch Geradenabschnitte (ki (i = 1 ... n)) eines fest vorgegebenen Rasters angenähert von der Fräsmaschine erzeugt wird. Da die Weite der Geradenabschnitte festliegt, nimmt die Abweichung der tatsächlich erzeugten Kontur von der gewünschten bzw. idealen Kontur K mit zunehmender Krümmung dieser Kontur K zu.

Besonders deutlich wird dies durch die übertriebene Darstellung in Figur 6B. Dort ist ein Ausschnitt der Kontur K aus Figur 6A gezeigt.

Die Kontur K wird mit Geradenabschnitten erzeugt, von denen hier nur der Abschnitt Ki dargestellt ist. Ein nicht dargestellter Fräser würde auf diesem Abschnitt Ki die Punkte P1 und P2 der Kontur K durch seine Fräserbahn verbinden.

Um die Annäherung an die gewünschte Kontur K zu verbessern, wird das Lot von dem Geradenabschnitt Ki auf die Kontur K gefällt und der Ort der größten Abweichung festgestellt. Der Schnittpunkt der Kontur K mit dem Lot bestimmt einen Punkt P3. Die NC-Steuerung, mit deren Hilfe der Punkt P3 ermittelt wurde, legt als neue Geradenabschnitte die Geraden Kj und Kk fest, mit denen die Punkte P1 und P3 sowie P3 und P2 verbunden werden. Es zeigt sich, daß die sogenannte Linearisierung durch die neuen Geraden Kj und Kk schon deutlich bessere Annäherung an die Kontur K gebracht hat. Wenn die gleiche Verfahrensweise auch an dem neuen Geradenabschnitt Kk durchgeführt wird, nähern sich die dadurch erzeugten Geradenabschnitte Kl und Km schon sehr stark an den realen Konturenverlauf K an. Es ist ersichtlich, daß mit diesem Verfahren zur krümmungsabhängigen Linearisierung auch die Geradenabschnittslänge krümmungsabhängig wird. Mit diesem Verfahren wird die Bahn des Fräsers an die Idealkontur in höchstem Maße angeglichen.

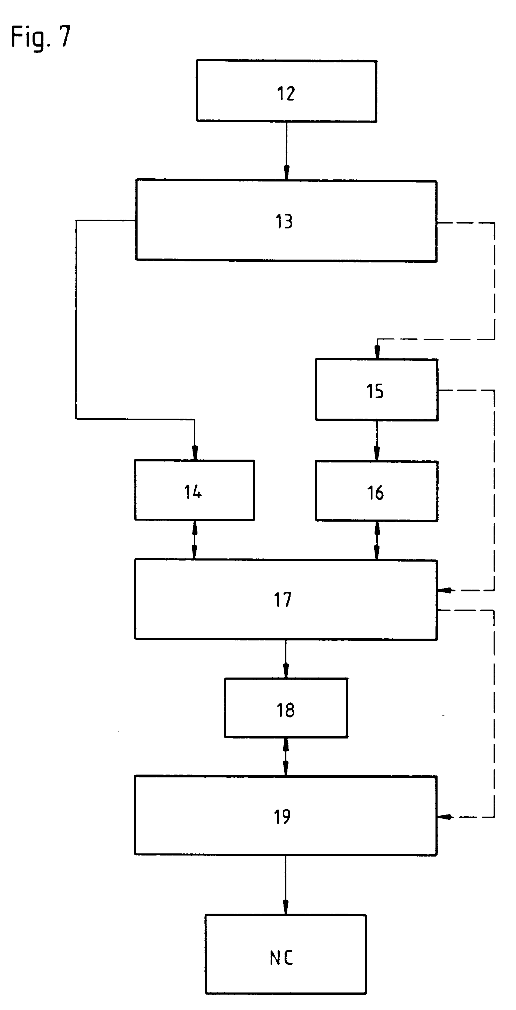

Im in Figur 7 gezeigten Blockdiagramm ist vereinfacht dargestellt, wie der Ablauf des Verfahrens erfolgt.

Durch eine Eingabeeinheit 12 werden in einer Vorrichtung 13 die Bearbeitungsparameter festgelegt und überprüft. Dies können die Rohlingabmessungen, die Bearbeitungsebene und die Zerspanungsbedingungen sein. Die Vorrichtung 13 ist mit einem Formenspeicher 14 verbunden, der die kompletten Körperdefinitionen enthält.

Aus den in der Vorrichtung 13 festgelegten Parametern werden in einem weiteren Schritt im Bauteil 15 die Körper auf die Grundkörper reduziert und deren Korrektur berechnet. Die Daten der korrigierten Konturen werden im 2d-Konturenspeicher 16 abgelegt.

Im Rechner 17 werden mit Daten aus dem Formenspeicher 14 und dem 2d-Konturenspeicher 16 die Schnittlinien der Grundkörper mit der Bearbeitungsebene berechnet. Danach werden in einem weiteren Konturenspeicher 18 die Schnittkonturen der Körper abgespeichert. Anschließend werden mit Hilfe des Rechners 19 mit den erzeugten Schnittlinien die Mengenoperationen (Bool'sche Operationen) durchgeführt und die errechneten Daten als Werkzeugbahn-Daten an die NC-Maschine weitergegeben.

**Patentansprüche**

1.   Verfahren für die Bearbeitung von Werkstücken durch Verknüpfung von Werkstück-Rohlingsdaten mit Werkzeugbahn-Daten mit Hilfe einer numerischen Steuerung, bei dem die Werkstückkontur durch Kombinationen von mathematisch definierbaren Grundkörpern gebildet wird, gekennzeichnet durch folgende Verfahrensschritte:

    a) an Daten für zweidimensionale Konturen (2d-Konturen) (5a) werden Werkzeugradius-Korrekturen vorgenommen, die als Daten für korrigierte 2d-Konturen (5c) abgespeichert werden;

    b) aus den Daten für korrigierte zweidimensionale Konturen (2d-Konturen) (5c) werden durch Translation und/oder Rotation dieser Konturen korrigierte dreidimensionale Grundkörper (3d-Objekte) (5d, 9, 10, 11) erzeugt und deren Daten abgespeichert;

    c) die Daten für die korrigierten dreidimensionalen Grundkörper (3d-Objekte) (5d, 9, 10, 11) werden zu Daten von beliebig im Raum orientierten, zusammengesetzten Körpern (8') verknüpft und abgespeichert, wobei die Oberflächen dieser korrigierten Körper (8') die Oberflächen eines äquidistanten Werkstückes (8) beschreiben.

2. Verfahren nach Anspruch 1, dadurch gekennzeichnet, daß als korrigierte Grundkörper (5d, 9, 10, 11) Vollkörper, Hohlkörper oder Negativkörper erzeugt werden.

3. Verfahren nach Anspruch 1, dadurch gekennzeichnet, daß durch Transformation der Daten der korrigierten zusammengesetzten Körper (8') beliebig im Raum orientierte Körper (8') erzeugt werden.

4. Verfahren nach Anspruch 1, dadurch gekennzeichnet, daß gekrümmte Konturen von Schnittlinien, die sich zwischen den Oberflächen der korrigierten Körper (8') und den jeweiligen, durch die Werkzeugbahn-Daten bestimmten Bearbeitungsebenen ergeben, abschnittsweise durch Interpolation linearisiert werden.

5. Verfahren nach Anspruch 4, dadurch gekennzeichnet, daß die Linearisierungs-Abschnitte abhängig von der Stärke der Krümmung sind.

6. Verfahren nach Anspruch 4, dadurch gekennzeichnet, daß die Anzahl der Interpolations-Abschnitte durch eine zulässige Abweichung der linearisierten Kontur von der gekrümmten Kontur (K) begrenzt wird.

7. Verfahren nach Anspruch 1, dadurch gekennzeichnet, daß anhand der Daten der korrigierten zusammengesetzten Körper (8') zeilen- und/oder spaltenweise Schnittpunktbetrachtungen mit Hilfe von mengentheoretischen Operationen durchgeführt werden, um zulässige Berandungspunkte (a1, a2; b1, b2; c1, c3; d1, d2) für die Bearbeitungs-Bahn zu gewinnen.

## Claims

1. A method of machining workpieces by combining workpiece blank data with tool path data with the aid of a numerical control, in which the workpiece contour is formed by combinations of mathematically defined basic bodies, characterized by the following method steps:

    a) tool radius corrections are applied to data for two-dimensional contours (2d-contours) (5a), which are stored as corrected 2d-contours (5c);

    b) corrected three-dimensional basic bodies (3d-objects) (5d, 9, 10, 11) are created from the data for corrected two-dimensional contours (2d-contours) (5C) by translating and/or rotating these contours and the data for these bodies are stored;

    c) the data for the corrected three-dimensional basic bodies (3d-objects) (5d, 9, 10, 11) are combined to data for assembled bodies (8') arbitrarily orientated in space and are stored, the surfaces of these corrected bodies (8') describing the surfaces of an equidistant workpiece (8).

2. A method according to claim 1, characterized in that solid bodies, hollow bodies or negative bodies are created as corrected basic bodies (5d, 9, 10, 11).

3. A method according to claim 1, characterized in that bodies (8') arbitrarily orientated in space are created by transformations of the data of the corrected assembled bodies (8').

4. A method according to claim 1, characterized in that curved contours of cutting lines which result between the surfaces of the corrected bodies (8') and the respective machining planes determined by the tool path data are linearised section by section by interpolation.

5. A method according to claim 4, characterized in that the linearisation sections are dependent on the strength of the curvature.

6. A method according to claim 4, characterized in that the number of interpolation sections is limited by a permitted deviation of the linearised contour from the curved contour (K).

7. A method according to claim 1, characterized in that row-wise and/or column-wise cutting point tests are carried out on the basis of the data of the corrected assembled bodies (8') with the aid of Boolean operations, in order to obtain permissible boundary points (a1, a2; b1, b2; c1, c3; d1, d2) for the machining path.


**Revendications**

1. Procédé pour l'usinage de pièces par combinaison de données d'ébauche de pièce avec des données de trajectoire d'outil à l'aide d'une commande numérique, dans lequel le contour de la pièce est formé par combinaison de corps de base qui peuvent être définis mathématiquement, caractérisé par les étapes suivantes:
   a) sur des données pour des contours à deux dimensions (contours 2d) (5a) on procède à des corrections de rayon d'outils qui sont mémorisées en tant que données pour des contours 2d (5c) corrigés;
   b) à partir des données pour des contours à deux dimensions (contours 2d) (5c) corrigés on produit par translation et/ou par rotation de ces contours des corps de base à trois dimensions (objets 3d) corrigés et on mémorise leurs données;
   c) on combine les données pour les corps de base à trois dimensions (objets 3d) à des données de corps (8') complexes présentant une orientation quelconque dans l'espace et on les mémorise,
   les surfaces desdits corps (8') corrigés décrivant les surfaces d'une pièce (8) équidistante.

2. Procédé selon la revendication 1, caractérisé par le fait que l'on produit comme corps de base (5d, 9, 10, 11) corrigés des corps pleins, des corps évidés ou des corps négatifs.

3. Procédé selon la revendication 1, caractérisé par le fait que par transformation des données des corps complexes (8') corrigés on produit des corps (8') ayant une orientation quelconque dans l'espace.

4. Procédé selon la revendication 1, caractérisé par le fait qu'on linéarise segment par segment par interpolation les contours courbes de lignes d'intersection qui résultent de l'intersection entre les surfaces des corps (8') corrigés et les différents plans d'usinage définis par les données de trajectoire d'outil.

5. Procédé selon la revendication 4, caractérisé par le fait que les segments de linéarisation dépendent de l'importance de la courbure.

6. Procédé selon la revendication 4, caractérisé par le fait que le nombre des segments d'interpolation est limité par un écart admissible du contour linéarisé par rapport au contour (K) courbe.

7. Procédé selon la revendication 1, caractérisé par le fait qu'à partir des données des corps (8') complexes corrigés on procède à une analyse en ligne et/ou en colonnes à l'aide d'opération appartenant à la théorie des ensembles aux fins d'obtenir des points de contour (a1, a2; b1, b2; c1, c3; d1, d2) admissibles pour la trajectoire d'usinage.

Fig. 1

Fig. 2A

4a
4b
4
4d
4i
4h
4g
4f

Fig. 2B

4a
4b
4e
4c
4f
4d
4g
4h
4i

Fig. 4A

6a    6u
7a
6    7

Fig. 4B

7b
6b    7u
6    7

Fig. 4C

7c
6u
6c
6    7

Fig. 3A

Fig. 3B

5a

5b

Fig. 3C

Fig. 3D

5c

5a

5b

5d

Fig. 5

Fig. 6A

Fig. 6B

## Fig. 7